# EUROPEAN PATENT APPLICATION

(11) **EP 1 376 057 A1**
(43) Date of publication of application: **02.01.2004**
(21) Application number: 02013648.7
(22) Date of filing: 19.06.2002
(51) Int. Cl.: G01C 21/20

(54) **A portable navigation device and a method for operating such device**

(71) Applicant: SIEMENS AKTIENGESELLSCHAFT, 80333 München (DE)
(72) Inventor: Winterkorn, Horst, 35435 Wettenberg-Wissmar (DE)

(57) **Abstract**

A portable navigation device (20, 42) comprises an on-board powering facility, a map data receiving port, a logic board (30) that contains one or more map data storage semiconductor chips (32) as well as data processing facilities (34) , a GPS unit (36), and output means (35, 40) for outputting user information. All these elements are operatively connected within a housing assembly (20, 42). In particular, the device comprises selection means for selectively downloading geographically limited map data when in an information exchange situation viz à viz a map data information source under control of inputting geographically specifying information by a user, whilst substantially blocking other map data. Furthermore the device allows to store route data that are associated to the geographically limited map data for therefrom deriving user information.

## Description

The invention relates to a portable navigation device, comprising an on-board powering facility, a map data receiving port, a logic board that contains one or more map data storage semiconductor chips as well as data processing facilities, a GPS unit, and output means for outputting user information, all of which elements are operatively connected within a housing assembly. Present-day navigation systems have relatively many facilities and parts, inasmuch as the main market appears to be their application in motor vehicles and such other environments where aspects such as price, weight, size, and power consumed are relatively inconsequential. Furthermore, the inventor has recognized that various other fields of application would require only the storage of a map of a much smaller size than necessary in case of such motor vehicle. In fact, at an average cruising speed of 80 kilometers per hour, the motor vehicle should require the information of a region of some 1000 kilometers in diameter. In contradistinction, a traveller by bicycle, mountain bike, or the like with a cruising speed of some 15 kilometers per hour should need a region of some 100 kilo-meters in diameter. Lastly, travelling by foot at some 4 kilometers per hour should need a region of some 25 kilometers in diameter. Similar arguments would apply in the case of boating. In various of these cases, the map of a single medium-sized country, such as Germany, would already be too large for average use.

The inventor has therefore recognized the advantages of only ***selectively*** loading the map data from the map data source, whilst substantially leaving out other map data. Of course, such procedure distinguishes from the selecting of a particular data source from a set of data sources, such as when choosing only a single CD-ROM from a pack of map information CD-ROMs. In contradistinction thereto, the present invention selects the map data on the basis of logical criteria for express application in a light-weight apparatus. In particular, the present invention allows for raised flexibility, and may come out with requiring less memory space.

In consequence, amongst other things, it is an object of the present invention to provide a device according to the preamble that allows selective loading of the map data.

Now therefore, according to one of its aspects the invention is characterized by comprising selection means for selectively downloading geographically limited map data when in an information exchange situation viz à viz a map data information source under control of inputted of geographically specifying information by a user, whilst substantially blocking other map data, and furthermore storing route data that are associated to said geographically limited map data for therefrom deriving said user information.

The geographical specifications may represent ***names*** of particular countries, regions, or cities, so that the map data of such country, etcetera will be downloaded. Such specification may represent a ***combination*** of such names, such as by specifying ***two*** cities, which will download those two cities, combined with an area in-between. A still further kind of specifying is by giving geographical coordinates that would specify a ***rectangle*** on the map, or another appropriate area. All such specifications would be rather straightforward to implement.

By itself, PCT International Application WO 96/14558 to NAVITRAK describes a portable navigation device that has several of the above recited features. However, in contradistinction to the present invention, no ***selection*** facility has been disclosed in the reference that allows to select map data on the basis of geographical information for on the basis thereof downloading only a part of the map data from the data source that would in principle have been accessible in total.

An embodiment of a portable navigation device according to the invention is preferably being characterized in that said output means comprise a speech output facility for outputting travelling indications associated to a pre-calculated route.

Said output means may preferably comprise a visual display facility that is selectively drivable to a low-power state whilst operating said speech output facility in a fully functional condition.

Another preferred embodiment of a portable navigation device according to the invention is characterized in that said selection means are arranged for allowing implementation of a selection criterion on the basis of a prospective use.

Alternatively, a portable navigation device according to the invention is characterized in that said selection means are arranged for allowing implementation of said limited map on the basis of one or more geographical names of entities such as nations, provinces, regions, cities, and the like.

According to another aspect of the invention, a portable navigation device is characterized by maintaining a requested route in storage, for allowing repeated user accessing thereof without re-specification of the route in question.

Another portable navigation device according to the invention is characterized by a specific user interface element for under control of user actuation thereof evoking an immediate determination of an actual geographical position.

An embodiment of a portable navigation according to the invention is characterized by a further specific user interface element for under control of user actuation thereof driving the device to operating as an accident or distress beacon.

Preferably, the number of said map data storage semiconductor chips with capacities in the Gigabyte region lies between one and four, inclusive, and wherein each such map data storage chip allows individual writing and deleting.

According to yet another aspect of the invention, a portable navigation device may preferably allow interfacing to said map data information source in the form of one of a PC, a CD, or an Internet-accessible central server facility.

A portable navigation device according to the invention may be characterized by a wireless interface facility for information exchange with a map data information source and/or by downloading an application from an external information source.

A portable navigation device according to the invention may preferably be characterized by fixating means for being fixated to a part of a two-wheeler vehicle and/or a human garment or body part.

The invention also relates to a method for operating a portable navigation device as recited herein.

These and further aspects and advantages of the invention will be discussed more in detail hereinafter with reference to the disclosure of preferred embodiments, and in particular with reference to the appended Figures that show:
- Figure 1,: an overall block diagram of a device according to the present invention;
- Figure 2,: a perspective view of the front side of an embodiment of such device;
- Figure 3,: a functional block diagram of the storage and user output facilities thereof;
- Figure 4,: a flow chart of operating a device according to the present invention.

Now, although the various key elements of the present invention need not all be simultaneously represented in the embodiments thereof, for due appreciation of the advances offered, hereinafter the following list of such items is presented.
#1. A preferred encapsulation of the invention is shaped like a standard portable telephone that carries several gigabyte storage semiconductor chips to allow the user to unimpeded view or listen to the data and routes that have been stored in the device.
#2. Downloadings may be effected through intermediary of a personal computer from an information source such as a CD-ROM or from Internet. Through acquiring an update license viz à viz the centralized map data, users could generally use a central server facility for such downloading. The service provider would then get the license fee, and the cost of the transferral would be carried by the actual user.
#3. The system is especially adaptable for persons riding bicycles, mountain bikes, motorcycles, and the like, who cannot repeatedly inspect small visual display facilities. In such case, the information output is preferably produced through a headset with earpieces. Backpackers and other persons on foot, as well as travellers by boat, such as canoes, may use the visual display on one of the sides of the device, to thereby get the signals as wished both optically and acoustically.
#4. An important aspect is the approach of sequentializing, so that only specific information is loaded into the device, such as being limited through the geographic limitations given by a particular "Land" (such as Hessen, Germany), province, Département (FR), state (US), county, canton, city with, or rather without suburbs or surrounding area (Greater London, Bay Area). Another possibility is the loading of data pertaining to larger geographically specified areas, such as countries like the United Kingdom or France, where only such data are downloaded that pertain to motorways and other highways (Red and Blue Highways, respectively).
#5. A particular input procedure will keep the requested route in the data store, so that immediate and repeated user output remains possible, without requiring the user to once more specify the route in question.
#6. The dividing of the data over a plurality of storage chips enables the user person to selectively delete and write any single storage chip. Such storage chips of 1 Gigabyte would store more than a single CD-ROM each. In particular, they should be re-writable an appreciable number of times.
#7. The switch-off of the visual display or any other low-power control thereof, whilst restricting the user output to activating of the speech processor channel only, will allow a prolonged operation whilst allowing the providing of only small power supply facilities.
#8. Actuation of a predefined key or button will allow the user to immediately determine actual position, at an accuracy of only a few meters. Furthermore, the device may comprise a fixating facility for being fixated to parts of a two-wheeler vehicle and/or a human garment or body part, such as by a band, a clip, or a holster.
#9. For using the device as a pathfinder, the device includes an accident or distress button. Actuation thereof will activate the device as a portable broadcast beacon, thereby allowing search parties to quickly find the device and its user.
#10. Various levels of complexity of the device relate to the technology of the visual display that may have a black and white LCD screen, a colour TFT screen, or another feasible technology. Furthermore, the number of storage chips may be in the region between one and four, inclusive. Various data transfer interfaces may be useful, such as IR, Bluetooth, USB, etcetera. In this way, the operation of the device would be reliable and user-friendly.
#11. The application can be downloaded. In particular, the device has no mechanically moving parts that could fail under high-G situations such as falling. Tripcontrol is a further useful facility.

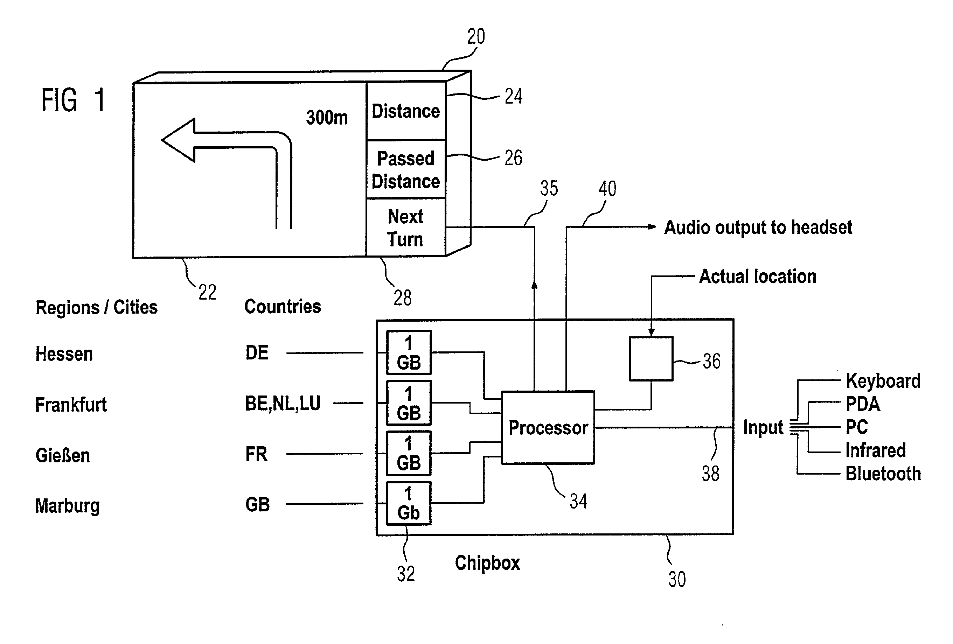

Figure 1 illustrates an overall block diagram of a device according to the present invention, such as could be used for (mountain)-bike-navigation. At the top of the Figure, the overall housing 20 is shown with a shape that is comparable to that of a portable telephone at a size of some 15 X 10 X 3 centimeters. As shown, the major part 22 of the housing front has been devoted to a visual display of some 8 X 8 centimeters that may be executed as a black and white LCD, a multicolour TFT, or according to some other suitable technology. As shown, the directive indication that is actually present, directs the user to turn left after 300 meters. At the right side, the display has various route indications, such as the total length of the trip 24, the distance already covered 26, and an indication concerning the next turn 28. The latter indication could embody any information thereon, such as the name of the crossroad, hamlet, or street.

Furthermore, at the bottom of the Figure the logic board or chip box of the portable navigation device has been shown in more detail. The map data is stored in four 1 Gigabyte storage chips 32, that in consequence could each accommodate the total contents of a CD-ROM disc. Other numbers of storage chips, as well as other capacities thereof would be useful. These data could be downloaded in a known manner such as on a DMA-basis under control of processor 34. The latter also accesses the map data, under co-control of the information received from GPS facility 36 that in consequence presents the actual location of the device, such as with an accuracy of a few meters or even less. The route indications go from processor 34 on interconnection 35 to the various user output facilities that are present in Figure 1 for visual display and/or speech output (not shown in Figure 1). Furthermore, input of various data and control items is executed on input 38, such as emanating from a keyboard, a personal digital assistant PDA, a Personal Computer, an Infrared link, or a Bluetooth interconnection. Arrow 40 represents audio output to a headset either as an ***alternative*** to visual display, in that only one of these can be active, or as a ***subsidiary,*** wherein the audio output is given in addition to the video, whereas the latter can be selectively put off.

As shown at lower left of the Figure, the storage organization in chips 32 may be assigned by the user to different countries such as Germany, Benelux, France and Great Britain, from top to bottom, or otherwise to regions or cities, such as Hessen, Frankfurt, Giessen, and Hamburg (all in Germany), respectively.

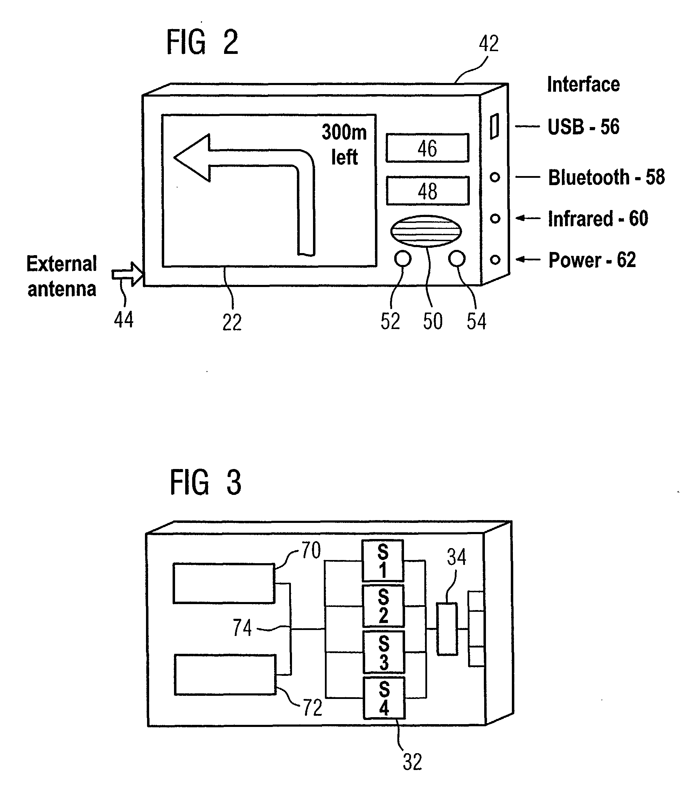

Figure 2 illustrates a perspective view of the front side of a device embodiment of the invention. The overall device 42 carries the same display 22 as in Figure 1. Various other facilities are different however, to wit, external and extendable antenna 44, indicator displays 46, 48, loadspeaker 50, GPS activation button 52, distress activation button 54, as well as various interface connections for USB 56, Bluetooth 58, InfraRed 60, and external power supply 62. The latter can be used for (re-)loading an on-board battery, or for executing the transfer of data from the map data source if such transfer needs a higher power level than standard. Note that in general, various applications of the present invention operate at a lower moving speed of the user than in a motor vehicle, and also in less critical situations, so that a slower generation and presentation of user results would cause fewer problems. This could allow for a slower operating processor and an associated lower power level.

Figure 3 illustrates a functional block diagram of the storage and user output facilities of a device according to the invention. The Figure once more shows the storage chips 32 connected to processor 34. At left in the Figure there are visual display facility 70 that can selectively be switched off through switch 74 and furthermore speech output facility 72.

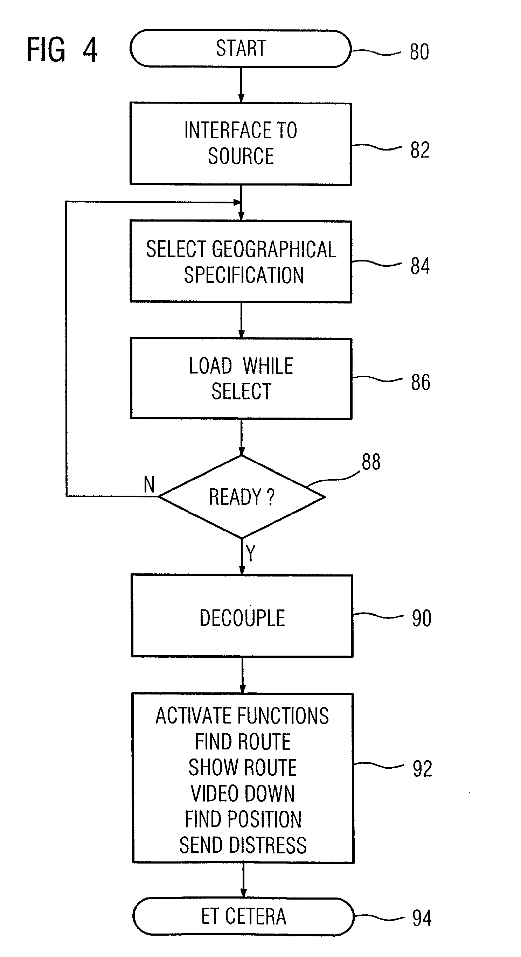

Figure 4 illustrates a flow chart for operating a device according to the present invention. In block 80, the operation is started and the necessary hardware and software facilities are assigned. In block 82, the device is interfaced to the applicable map data source, such as a PC with a CD-ROM, or a remote Internet server. In block 84, the user person selects the applicable geographical specification. This can be a region according to the discussion herebefore, a combination of two or more regions, or other. For example, if two non-contiguous regions are selected, also the intermediate stretch will be selected for transfer.

From the size of the map data of the selected region(s) and the available storage capacity assigned to the loading operation, a selection criterion can be determined. This selection criterion can imply to download only a part of the map data of the selected region, such as only highways, or only waterways, or only such routes that are allowed/feasible for prospective use by a particular category of users such as bikers. Another selection criterium is on the basis of geographical area, through user-selection by inputting names. This would select a set of road nodes, and subsequently restrict downloading to roads interconnecting, or being linked to such allowed nodes. The two criteria can be combined.

Next, in block 86 the map data is accessed and only the part that passes the selection criterion is transferred into the device, whereas the remainder is kept out. In block 88, the device determines whether the loading is ready. This may be effected in a dialog with the user person. In block 90, the device is uncoupled from the data source, such as by unplugging from the PC that runs the CD in question, or by terminating the communication session with the Internet server. In block 92, the various functions of the portable navigation device may be activated by the user, such as FIND ROUTE, SHOW ROUTE, VIDEO DOWN to a power saving state, FIND ACTUAL POSITION through GPS, SEND DISTRESS signal, and possible others. By themselves, these operations have been disclosed in other navigation environments, and their precise execution, algorithms, and the like, have not been further discussed for brevity. In particular, routes once calculated may remain stored as individual and reusable entities until express deleting thereof. In block 94, this situation may go on, such as until reentering block 82. For brevity, various loops and determination steps have not been shown in any further detail, so as not to unnecessarily obscure the invention proper.

In the above, the invention has been disclosed with reference to preferred embodiments. However, persons skilled in the art will upon reading the disclosure readily recognize various changes and amendments to the above. In consequence, the embodiments should not be contrued as restrictive, but rather be read by way of illustrations. The due scope of the present invention should in consequence be determined by the scope of the appended Claims.

## Claims

1. A portable navigation device (20, 42), comprising an on-board powering facility, a map data receiving port, a logic board (30) that contains one or more map data storage semiconductor chips (32) as well as data processing facilities (34), a GPS unit (36), and output means (35, 40) for outputting user information, all of which elements are operatively connected within a housing assembly (20, 42), said device being **characterized by** comprising selection means for selectively downloading geographically limited map data when in an information exchange situation viz à viz a map data information source under control of inputted of geographically specifying information by a user, whilst substantially blocking other map data, and furthermore storing route data that are associated to said geographically limited map data for therefrom deriving said user information.

2. A portable navigation device as claimed in Claim 1, being **characterized in that** said output means comprise a speech output facility (50, 72) for outputting travelling indications associated to a precalculated route.

3. A portable navigation device as claimed in Claim 2, being **characterized in that** said output means furthermore comprise a visual display facility (22, 24, 26, 28, 46, 48, 70) that is selectively drivable to a low-power state whilst operating said speech output facility in a fully functional condition.

4. A portable navigation device as claimed in Claim 1, being **characterized in that** said selection means are arranged for allowing implementation of a selection criterion on the basis of a prospective use.

5. A portable navigation device as claimed in Claim 1, being **characterized in that** said selection means are arranged for allowing implementation of said limited map on the basis of one or more geographical names of entities such as nations, provinces, regions, cities, and the like.

6. A portable navigation device as claimed in Claim 1, being **characterized by** maintaining a requested route in storage, for allowing repeated user accessing thereof without re-specification of the route in question.

7. A portable navigation device as claimed in Claim 1, being **characterized by** a specific user interface element (52) for under control of user actuation thereof evoking an immediate determination (36) of an actual geographical position.

8. A portable navigation device as claimed in Claim 1, being **characterized by** a further specific user interface element (54) for under control of user actuation thereof driving the device to operating as an accident or distress beacon.

9. A portable navigation device as claimed in Claim 1, being **characterized in that** the number of said map data storage semiconductor chips (32) with capacities in the Gigabyte region lies between one and four, inclusive, and wherein each such map data storage chip allows individual writing and deleting.

10. A portable navigation device as claimed in Claim 1, being **characterized by** allowing interfacing to said map data information source in the form of one of a PC, a CD, or an Internet-accessible central server facility.

11. A portable navigation device as claimed in Claim 1, being **characterized by** a wireless interface facility (60) for information exchange with a map data information source.

12. A portable navigation device as claimed in Claim 1 being **characterized by** downloading an application from an external information source.

13. A portable navigation device as claimed in Claim 1, being **characterized by** fixating means for being fixated to a part of a two-wheeler vehicle and/or a human garment or body part.

14. A method for operating a device as claimed in Claim 1, being **characterized by** the following steps:
activating (80) an on-board powering facility for a map data receiving port, a logic board that contains one or more map data storage semiconductor chips as well as data processing facilities, a GPS unit, and output means for outputting user information, all of which elements are operatively connected within a housing assembly, activating (82) an information exchange viz à viz a map data information source whilst inputting geographically specifying information (84),
selectively downloading (86) map data that are geographically limited by said geographically specifying information whilst substantially blocking other map data,
and furthermore storing route data that are associated to said geographically limited map data for therefrom deriving said user information.
